# EUROPEAN PATENT SPECIFICATION

(11) **EP 2 245 337 B1**
(45) Date of publication and mention of the grant of the patent: **10.07.2013**
(21) Application number: 09702565.4
(22) Date of filing: 13.01.2009
(51) Int. Cl.: F16H 3/76, F16H 1/32

(54) **A GEAR ASSEMBLY WITH BIDIRECTIONAL CONTINUOUS SPEED REGULATION AND A METHOD FOR VARIATION OF THE DIRECTION OF ROTATION**
ZAHNRADANORDNUNG MIT BIDIREKTIONALER, KONTINUIERLICHER DREHZAHLREGELUNG UND VERFAHREN ZUR ÄNDERUNG DER DREHRICHTUNG
ENSEMBLE ENGRENAGE À RÉGULATION DE VITESSE CONTINUE BIDIRECTIONNELLE ET PROCÉDÉ PERMETTANT DE MODIFIER LE SENS DE ROTATION

(30) Priority: 15.01.2008 CZ 20080020
(43) Date of publication of application: 03.11.2010
(73) Proprietor: DVORÁK - svahové sekacky s.r.o., 580 01 Havlickuv Brod (CZ)
(72) Inventor: DVORAK, Lubomir, 580 01 Havlíckuv Brod (CZ)
(74) Representative: Plicka, Josef
(86) International application number: PCT/CZ2009/000002
(87) International publication number: WO 2009/089803

(56) References cited:
- DE-A1- 2 435 652
- DE-A1- 10 328 137
- US-A- 5 273 497
- DANIEL H: "IST EIN STUFENLOSES ECHT FORMSCHLUESSIGES GETRIEBE MOEGLICH?" ANTRIEBSTECHNIK, VEREINIGTE FACHVERLAGE, MAINZ, DE, vol. 23, no. 5, 1 January 1984 (1984-01-01), page 49/50, XP001160734 ISSN: 0722-8546
- JAHR A: "ES IST KEIN FORMSCHLUESSIGES STUFENLOSES GETRIEBE MOEGLICH" ANTRIEBSTECHNIK, VEREINIGTE FACHVERLAGE, MAINZ, DE, vol. 28, no. 1, 1 January 1989 (1989-01-01), page 45/46, XP001160727 ISSN: 0722-8546

## Description

### Technical Field of the Invention

The present invention relates to a gear assembly.

The gear assembly is adapted for the bidirectional continuous rotating speed regulation that is applicable in the unlimited scope in every case, when the continuous regulation of the input rotating speed or power input of driven unit is needed and when the simultaneous regulation of the output rotating speed or power output of driving unit is needed.

### Background Art of the Invention

In the prior art there is known a variety of gear devices in order to provide transmission and or regulation of the output and/or rotational speed from driving aggregate to driven unit.

There is known a classic gearbox with toothed wheels having a jump regulation of the output speed.

There is known a screw gearbox or gearbox combined with toothed and worm transmissions.

There are also known transmission devices working by means of vee belts, flat belts or another shaped belts or chains.

There are known also different variable speed gearboxes.

There are known cycloidal transmissions, planet transmissions or transmissions with bevel wheels and continuous speed regulation.

In addition, there are known also hydraulic transmissions, where by means of hydraulic aggregate and a proper regulation of oil flow there is possible to continuously regulate an output for hydraulic driving units.

Similarly, there are known also pneumatic transmissions, working on the similar principle.

There is also known a variety of combinations of the above mentioned gear assemblies.

The generic Document DE 103 28 137 A1 discloses a continuous gear assembly having two geared transmission components. One of said transmission components is rotatable around its axis. The other transmission component is substantially fixed. Both the transmission components are in the permanent geared engagement.

Following the circular motion of the first component about the central axis, the second component exercises the compulsory motion around the central axis. The distance of the first component's axis from the central axis is adjustable, and consequently the distance of the second component's axis from the central axis is also adjustable.

The traditional approach based on the above mentioned arrangements known in the prior art suffers from a lot of disadvantages.

In particular, a clutch is necessary, development space is great, reverse wheel for return motion is necessary, and in some embodiments no continuous speed regulation is possible.

In addition, high losses of energy are involved in case of hydraulic systems that are commonly used in the field of the construction engineering and municipal services, if the precise and continuous control of the output rotating speed or power output is requested.

The present invention can fully replace and substantially simplify the procedure of comfortable control of rotating speed in comparison with a known hydraulic system.

If such hydraulic system would provide the continuous control, it requires a lot of components as pump, hydraulic circuit, distributor, hydraulic motor, etc.

The purpose of the present invention is to provide an apparatus, in which the above mentioned problems of the prior art are eliminated.

### Summary of the Invention

In accordance with the present invention there is provided a gear assembly comprising the features of claim 1.

On the primary shaft there is arranged an eccentric for changing a position of axis of rotation of eccentric in the upwards and downwards directions and with respect to axis of rotation of primary shaft.

On the eccentric there is rotationally arranged an output segment that is connected by means of coupling member with the secondary shaft.

An outer guide of the output segment is arranged on the gearbox, wherein a device for control of eccentric is arranged on the primary shaft.

The device for control of eccentric is adapted to change the position of axis of rotation of eccentric in the upwards and downwards directions with respect to the axis of rotation of primary shaft.

The device for control of eccentric can be controllable mechanically, pneumatically, hydraulically or electromagnetically.

The outer guide of output segment is advantageously arranged for immediate anchorage of the output segment in point depending on the position of eccentric and for providing rotation of the output segment around the axis of rotation of eccentric.

The coupling member is advantageously adapted for transmission of rotational movement of the output segment around axis of rotation of eccentric on the secondary shaft.

By means of changing the position of axis of rotation of eccentric in relation to the position of axis of rotation of primary shaft the rotating speed of secondary shaft transmitted by gear assembly from primary shaft is continuously regulated.

The bigger deflection of axis of rotation of eccentric is, the bigger is the rotational speed of secondary shaft transmitted from primary shaft.

At the deflection of axis of rotation of eccentric in direction above axis of rotation of primary shaft, the direction of rotation of secondary shaft is identical with direction of rotation of the primary shaft.

At the deflection of axis of rotation of eccentric in direction under the axis of rotation of primary shaft, the direction is reversal to direction of rotation of the primary shaft.

If rotation of the primary shaft in direction of rotation of the primary shaft is provided, when by means of change of axis of rotation of eccentric in direction of displacement of axis of eccentric above the axis of rotation of the primary shaft or in direction of displacement of axis of eccentric below the axis of rotation of the primary shaft in relation to position of axis of rotation of primary shaft and at simultaneous immediate anchorage of output segment in point of anchorage in outer guide, when output segment is rotationally arranged on eccentric, there is provided rotational movement of axis of rotation of eccentric in direction of rotation of the output segment, wherein the eccentric is entrained by the primary shaft.

The eccentric is adapted for shifting of axis of rotation of eccentric in both directions and in relation to axis of rotation of primary shaft, i.e. above and under said axis.

At deflection of axis of rotation of eccentric in direction above said axis of rotation of primary shaft, the output segment carries out a rotational movement in one direction of rotation of the output segment, wherein at deflection of axis of rotation of eccentric in direction under said axis of rotation of primary shaft, the output segment carries out a rotational movement in the reverse direction.

If the axis of rotation of eccentric exactly coincides with axis of rotation of primary shaft, the output segment does not perform any rotational movement and the secondary shaft is standing.

The coupling member that transmits rotational movement of the output segment connects this output segment to the secondary shaft.

At constant rotating speed of the primary shaft, the rotating speed of the output segment, and therefore the rotating speed of the secondary shaft, is the bigger, the bigger is deflection of axis of rotation of eccentric in direction of displacement of axis of eccentric above the axis of rotation of the primary shaft or direction of displacement of axis of eccentric below the axis of rotation of the primary shaft from axis of rotation of primary shaft.

The outer guide of output segment provides change of point of anchorage of output segment depending on rotational movement of the output segment.

If the secondary shaft rotates in one direction of rotation of the secondary shaft and by means of the coupling member, the output segment is entrained in direction of rotation of the output segment, when by means of change of axis of rotation of eccentric in direction of displacement of axis of eccentric above the axis of rotation of the primary shaft or in direction of displacement of axis of eccentric below the axis of rotation of the primary shaft in relation to position of axis of rotation of primary shaft and at simultaneous immediate anchorage of output segment in point of anchorage in outer guide, when output segment is rotationally arranged on eccentric, there is provided rotational movement of axis of rotation of eccentric in direction of rotation of eccentric, and therefore rotational movement of primary shaft in direction of rotation of the primary shaft, wherein the primary shaft is entrained by the eccentric.

The eccentric is adapted for shifting of axis of rotation of eccentric in both directions in relation to axis of rotation of primary shaft, i.e. above and under said axis.

At deflection of axis of rotation of eccentric in direction above the axis of rotation of primary shaft, the primary shaft carries out a rotational movement in one direction of rotation of the primary shaft, wherein at deflection of axis of rotation of eccentric in direction under the axis of rotation of primary shaft, the primary shaft carries out a rotational movement in the reverse direction.

If the axis of rotation of eccentric exactly coincides with axis of rotation of primary shaft, the eccentric does not perform any rotational movement and the primary shaft is standing.

The coupling member connects output segment that transmits rotational movement of the secondary shaft to the output segment.

At constant rotating speed of the secondary shaft, the rotating speed of axis of rotation of eccentric, and therefore the rotating speed of the primary shaft, is the bigger, the bigger is deflection of axis of rotation of eccentric in direction of displacement of axis of eccentric above the axis of rotation of the primary shaft or in direction of displacement of axis of eccentric below the axis of rotation of the primary shaft from axis of rotation of primary shaft.

The outer guide of output segment provides change of point of anchorage of output segment depending on rotational movement of the output segment.

### Brier Description of the Drawings

These, as well as other objects and advantages of this invention, will be more completely understood and appreciated by careful study of the following more detailed description of the presently preferred exemplary embodiments of the invention taken in conjunction with the accompanying drawings, in which:
Fig. 1a schematically illustrates a gear assembly with bidirectional continuous rotating speed regulation;
Fig. 1b is a cross-sectional view taken along line A-A in Fig. 1;
Fig. 2a schematically illustrates a principle of continuous rotating speed regulation and a change of direction of rotation of secondary shaft when axis of rotation of eccentric is above the axis of rotation of primary shaft;
Fig. 2b schematically illustrates a principle of continuous rotating speed regulation and a change of direction of rotation of secondary shaft when axis of rotation of eccentric is under the axis of rotation of primary shaft;
Fig. 2c schematically illustrates a principle of continuous rotating speed regulation and a change of direction of rotation of secondary shaft when axis of rotation of eccentric is coincides with the axis of rotation of primary shaft;
Fig. 2d schematically illustrates a principle of continuous rotating speed regulation and a change of direction of rotation of primary shaft when axis of rotation of eccentric is above the axis of rotation of primary shaft;
Fig. 2e schematically illustrates a principle of continuous rotating speed regulation and a change of direction of rotation of primary shaft when axis of rotation of eccentric is under the axis of rotation of primary shaft;
Fig. 2f schematically illustrates a principle of continuous rotating speed regulation and a change of direction of rotation of primary shaft when axis of rotation of eccentric is coincides with the axis of rotation of primary shaft;
Fig. 3 illustrates a practical example of the embodiment of the gear assembly according to the present invention;
Fig. 4a illustrates a simplified example of mounting of the output segment;
Fig. 4b illustrates an example of an embodiment of outer guide of the output segment;
Fig. 5 is an exploded perspective view showing an example of embodiment of driving device of gearbox;
Fig. 6 is a schematic view of an example of gear assembly; and
Fig. 7 is a schematic view showing gear assembly with recuperation of kinetic energy.

### Detailed Description of the Preferred Embodiments

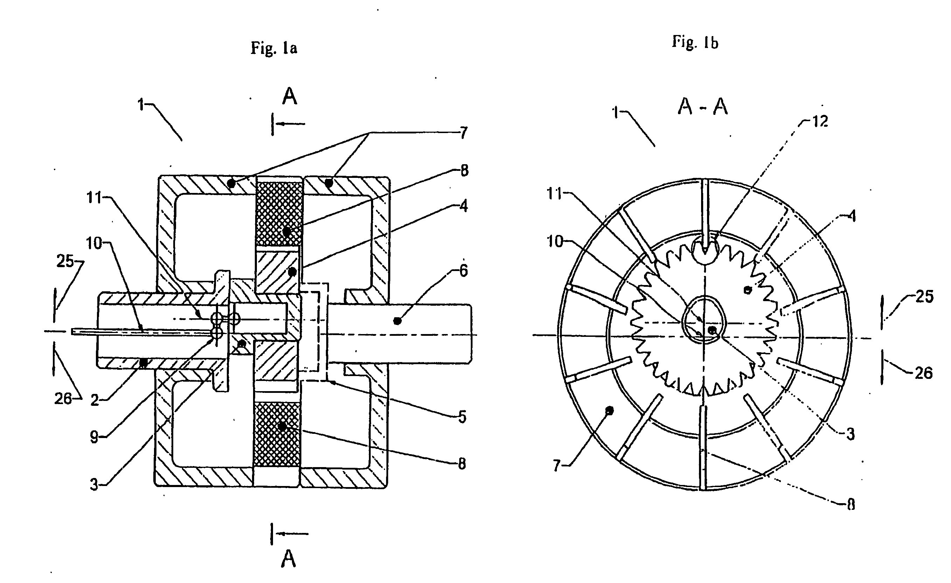

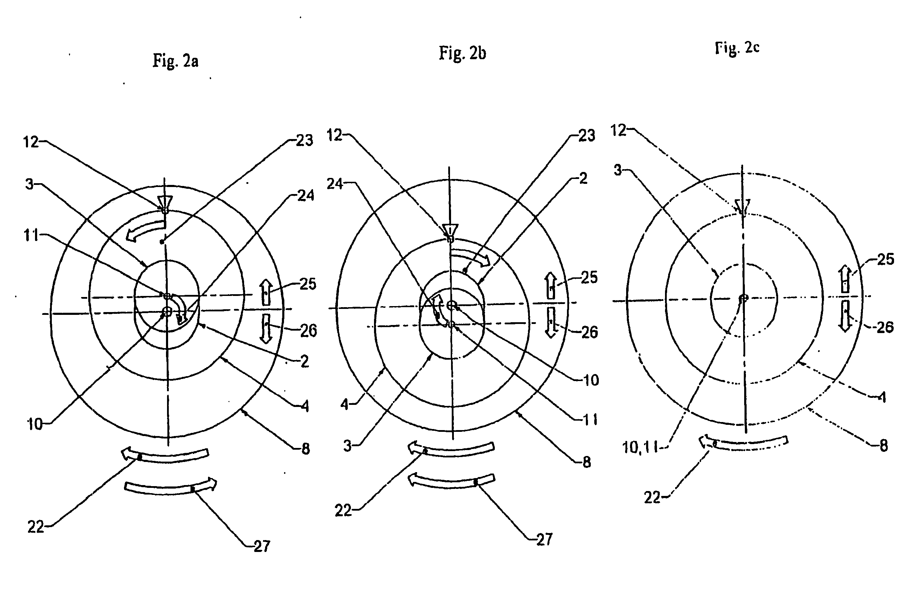

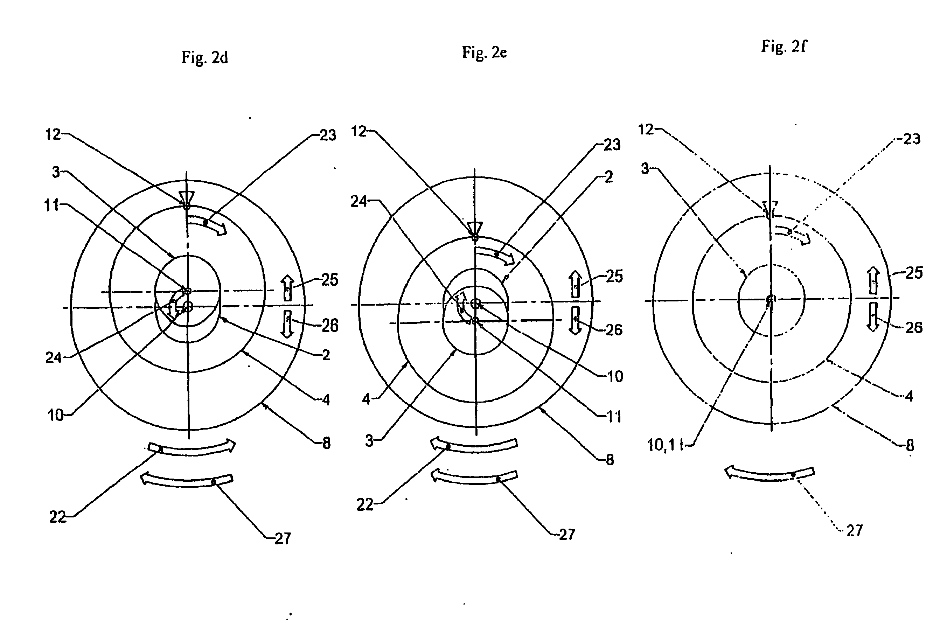

The present invention relates to a new type of the gear assembly **1** as schematically shown in Figures 1a, 1b and Figures 2a through 2f where speed control from primary shaft **2** to secondary shaft **6** is realized by means of eccentric **3** allowing continuous speed variation from zero to maximum in both directions of rotation.

The gear assembly **1** also allows driving the secondary shaft **6** and controlling the speed of the primary shaft **2** so that the gear assembly can be used bidirectionally.

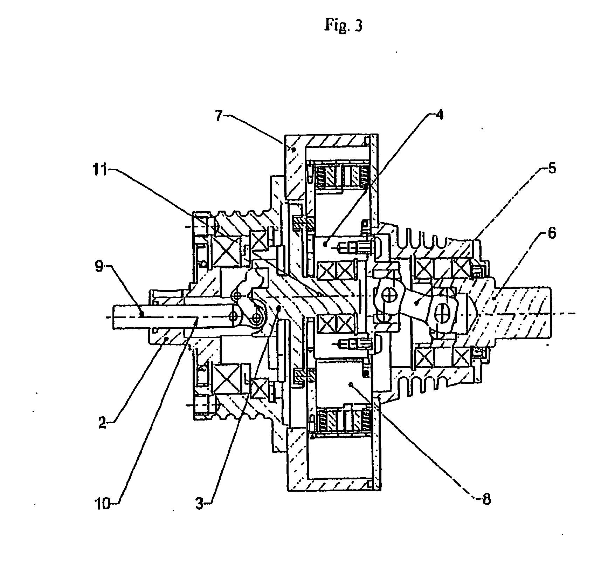

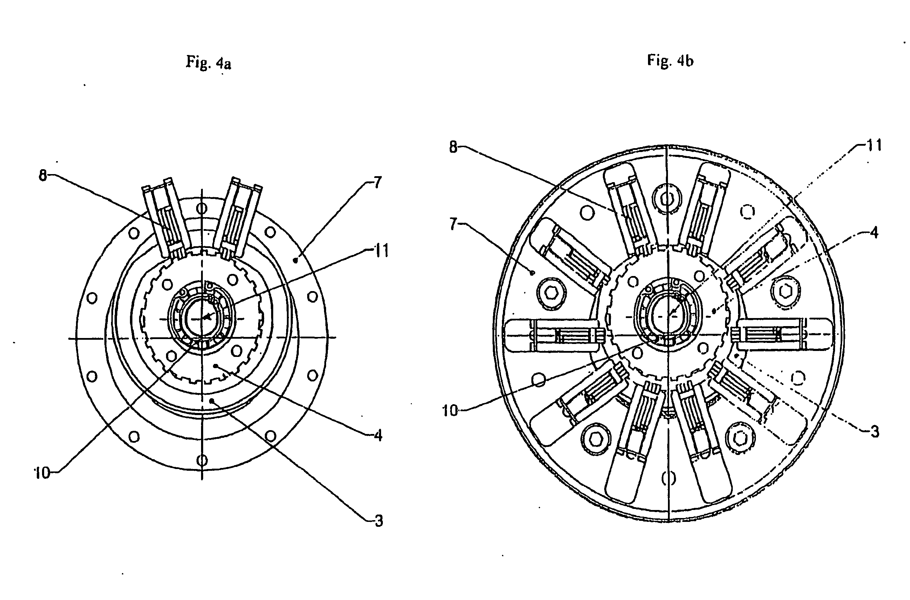

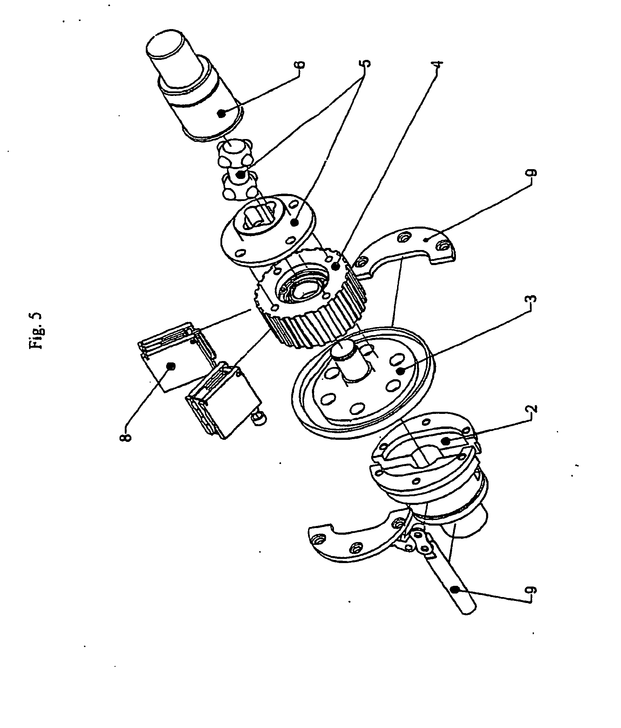

Examples of the embodiment are shown in Figures 3, 4a, 4b, 5, 6 and 7.

The gear assembly **1** comprises a gearbox **7** provided with the primary shaft **2** and the secondary shaft **6**.

On the primary shaft **2** there is arranged the eccentric **3** for changing a position of axis **11** of rotation of the eccentric **3** in the upwards and downwards directions and with respect to axis **10** of rotation of the primary shaft **2**.

On the eccentric **3** there is rotationally arranged an output segment **4** that is connected by means of coupling member **5** with the secondary shaft **6**.

An outer guide **8** of the output segment **4** is arranged on the gearbox **7**.

A device **9** for control of eccentric **3** is arranged on the primary shaft **2**.

The device **9** is adapted to change the position of axis **11** of rotation of eccentric **3** in the upwards and downwards directions with respect to the axis **10** of rotation of primary shaft **2**.

The present gearbox is destined for utilizing in mechanisms, two-wheeled or multi wheeled vehicles, municipal machines, for example for traveling of different kinds of mowers, allowing continuous regulation of power output transmission from driving aggregate to the traveling device.

Principle of reversing the direction of rotation consists in that the primary shaft **2** is not firmly or by means of gears coupled with the output, i.e. secondary shaft **6**, but the primary shaft **2** is coupled with the eccentric **3** that is deflected from axis **10** of rotation of the primary shaft **2** in both directions.

On the eccentric **3** shaft there is rotationally arranged an output segment **4** that rotates depending on deflection of the eccentric **3** from axis **10** of rotation of the primary shaft **2**.

Furthermore, the movement of the output segment **4** is transmitted by means of the coupling member **5**, for example an articulated shaft, to the secondary shaft **6** of the gear assembly **1**.

Output segment **4** is freely arranged on the eccentric **3**, it means that if axis **11** of rotation of eccentric **3** coincides with axis **10** of rotation of primary shaft **2**, then the output segment **4** does not rotate, no movement is transmitted to the secondary shaft **6**, and this secondary shaft **6** is standing.

At a moment of deflection of eccentric **3** out of the axis of rotation of the primary shaft **2** the output segment **4** begins to rotate and axis of rotation of the output segment **4**, or more precisely axis **11** of rotation of eccentric **3**, begins to describe circles around the axis **10** of rotation of the primary shaft **2**.

Diameter of these circles is the bigger, the bigger is deflection of axis **11** of rotation of eccentric **3** to the axis **10** of rotation of primary shaft **2**.

Rotational movement of the output segment **4** is then transmitted by means of coupling member **5**, for example articulated shaft or another suitable mechanical, electromagnetic, pneumatic or hydraulic link, to the secondary shaft **6**.

Outer segment **4**, from which the rotational speed is transmitted to the gearbox output, rotates in a suitable outer guide **8** of the output segment **4** allowing the above mentioned movement.

Output segment **4** can comprise, for example, a gear rotationally arranged in suitable outer guide **8** realized e.g. as a flexible lamellar guide allowing to anchor the output segment **4** according to deflection of axis **11** of rotation of eccentric **3** from the axis **10** of rotation of the primary shaft **2**.

Thrust of lamellar outer guide **8** onto the output segment **4** can be provided, for example, mechanically, pneumatically, hydraulically, electromagnetically, etc.

Deflection of the eccentric **3** to the axis **10** of rotation of the primary shaft **2** can be provided by means of suitable device **9** controlled, for example, mechanically, pneumatically, hydraulically, electromagnetically, etc.

Transmission of the output segment **4** movement to the secondary shaft **6** of the gearbox can be realized by means of the coupling member with any suitable link, for example, mechanically, pneumatically, hydraulically, electromagnetically, etc.

The present gear assembly **1** allows to change direction of rotation of the secondary shaft **6**, as well as to continuously regulate the rotational speed of the secondary shaft **6** in both directions of rotation, and to attain the complete stoppage of rotation of the secondary shaft **6** of the gear assembly **1**.

Change of direction of rotation is in principle shown schematically in Figures 2a through 2f. Individual cases are described below in detail.

For all the described cases it is to be assumed that the driving primary shaft **2** rotates around its axis 10 of rotation always in one direction, i.e., for example, in the clockwise direction.

For better understanding, in all the hereinafter described cases there is assumed a moment, when the eccentric **3 is** just in the position, in which the output segment **4** is anchored in the outer guide **8** in the upper position, i.e. at 12 hours.

### 1. Secondary shaft 6 of the gearbox is rotated in one direction - in the clockwise direction

In case when the eccentric **3**, or more precisely the axis **11** of rotation of eccentric **3**, is deflected in one direction at first above the axis **10** of rotation of primary shaft **2**, then the shape of eccentric **3** allows anchorage in point **12** of the upper part of the output segment **4** in the flexible bearing of the outer guide **8**.

The axis **11** of rotation of eccentric **3** begins describe circles around the axis **10** of rotation of primary shaft **2**, and the output segment **4** that is rotationally arranged on the eccentric **3** shaft, rotates in one direction, wherein this rotation is transmitted to the secondary shaft **6** of the gearbox by means of the coupling member **5**. This principle is shown in Figure 2a.

Rotation of the output segment **4** is the bigger, the bigger is deflection of axis **11** of rotation of eccentric **3** from axis **10** of rotation of primary shaft **2**.

### 2. Secondary shaft 6 of the gearbox is rotated in reversal direction - in the anticlockwise direction

Change of direction of rotation of the output segment **4** and simultaneously of the secondary shaft **6** of the gearbox can be achieved by resetting of eccentric **3** or axis **11** of rotation of eccentric **3** in the reverse direction, i.e. in this case under the axis **10** of rotation of primary shaft **2**.

The shape of eccentric **3** allows anchorage in point **12** of the upper part of the outer segment **4** in resilient seating of the outer guide **8**.

The axis **11** of rotation of eccentric **3** begins describe circles around axis **10** of rotation of the primary shaft **2**, and the output segment **4** that is rotationally arranged on the eccentric **3** shaft, rotates in reversal direction than in the above case, wherein this rotation is transmitted to the secondary shaft **6** of the gearbox by means of the coupling member **5**. This principle is shown in Figure 2b.

Rotation of the output segment **4** is the bigger, the bigger is deflection of axis **11** of rotation of eccentric **3** from axis **10** of rotation of primary shaft **2**.

### 3. Secondary shaft 6 of the gearbox is standing - neutral position

In case when the axis **11** of rotation of eccentric **3**, and therefore the axis of the output segment **4**, coincides with the axis **10** of rotation of the primary shaft **2**, then the axis **11** of rotation of eccentric **3** does not describe circles around the axis **10** of rotation of the primary shaft **2**, the output segment **4** that is rotationally arranged on eccentric **3** does not rotate, and the secondary shaft **6** of the gearbox is standing, see Figure 2c.

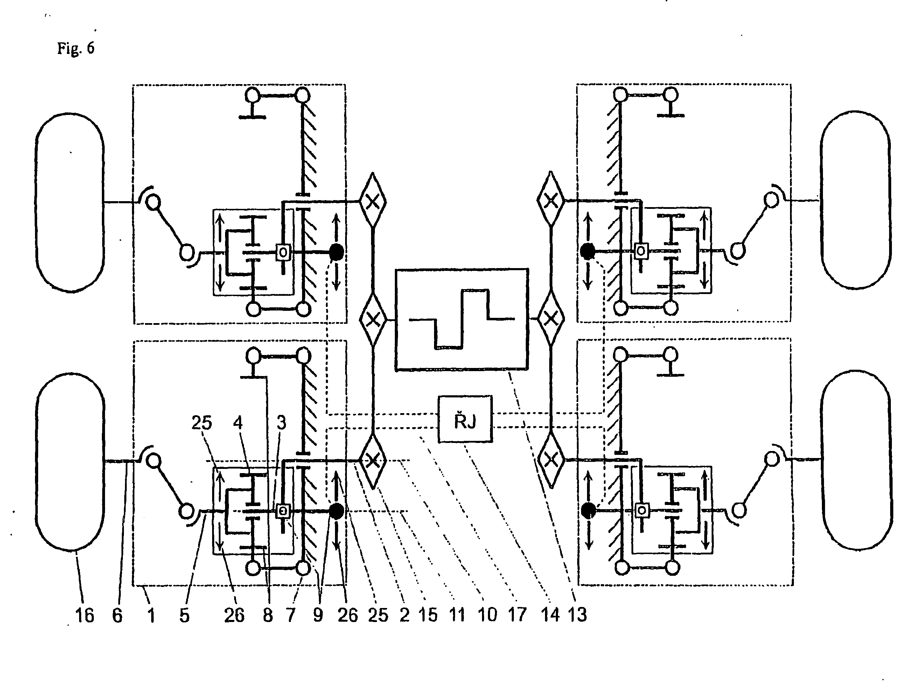

Gear assembly according to the present invention can be advantageously applied also as replacement of differential, used e.g. in mutli-wheeled vehicles or mechanisms for driving travelling wheels, as schematically shown in Figure 6.

Driving unit **13** is by means of transmission members **15** and primary shaft **2** connected with travelling units consisting of gear assembly **1** and travelling wheel **16**.

Power output or rotating speed transmitted from the driving unit **13** to the travelling wheels can be regulated by means of control unit **14** connected with the device **9** for control of eccentric 3 by means of link **17**, being for example, electric, electromagnetic, pneumatic, hydraulic, mechanical, etc.

Therefore, the rotating speed of the travelling wheels **16** can be controlled by means of the control unit **14** so that each wheel can be controlled independently, all the wheels can be controlled together, or one or more travelling wheels can be controlled in dependence of rotating speed of another travelling wheel or wheels.

The number of control units can be any amount.

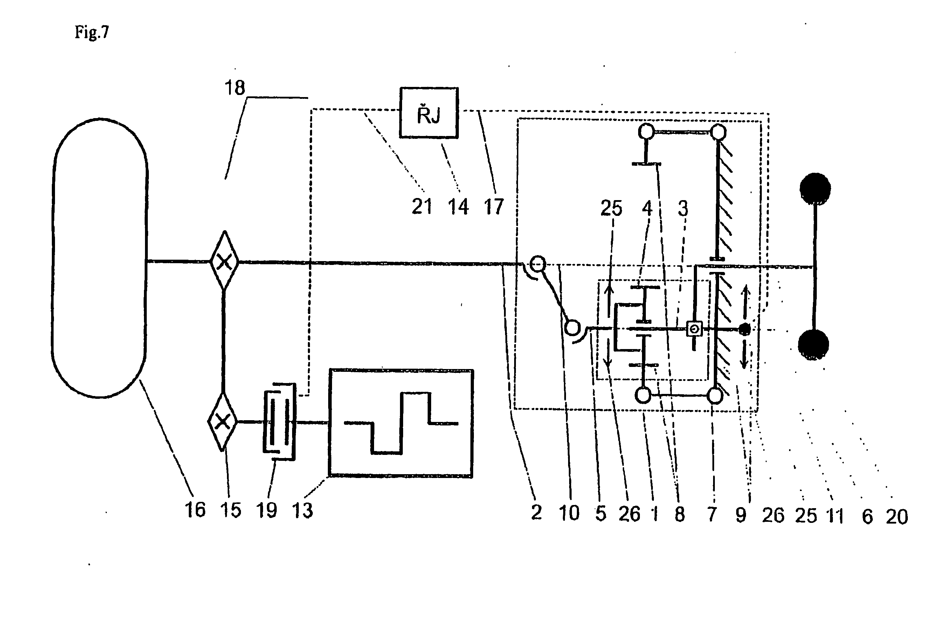

Another example of utilizing the present invention is schematically shown in Figure 7.

Travelling device **18** comprises gear assembly **1**. Secondary shaft **6** is provided with a flywheel **20**, and primary shaft **2** is connected by means of transmission members **15** with travelling wheel **16** that is driven by driving unit **13**, connected therewith by means of transmission members **15** and coupling device **19**.

Furthermore, the travelling device **18** comprises control unit **14** connected by link **17** with the device **9** for control of eccentric **3**, and also connected by link **21** with the coupling device **19**.

Links **17** and **21** can be mechanic, electric, electromagnetic, pneumatic, hydraulic or combination thereof.

Travelling device can be arranged on any type of chassis of the vehicle or mechanism that can comprise any amount of these travelling devices.

The present gear assembly **1** allows the transmission of rotating speed or power output also in the reverse direction, i.e. from the secondary side to the primary side.

Accordingly, if the secondary shaft **6** is rotated, then by means of the above described method the rotating speed of the primary shaft **2** can be regulated.

This characteristic can be used for recuperation or recovery of the kinetic energy during braking (or deceleration) and driving the mechanisms.

Travelling device **18** allows by means of the gear assembly **1** to provide continuous change of rotating speed of the flywheel **20**.

The kinetic energy transmitted from the travelling wheel 16 can be simultaneously accumulated in the flywheel 20 so that the controlled braking of the travelling wheel 16 can be achieved.

Gear assembly 1 also allows transmission and continuous regulation of rotating speed of the flywheel 20 towards to the traveling wheel 16.

Accumulated kinetic energy can be therefore transmitted from the flywheel 20 back to the travelling wheel 16.

In this way the continuous control of the travelling wheel 16 drive can by achieved by means of recuperation of the kinetic energy.

By means of the control unit **14** and links **17** and **21** it is possible to control the rotating speed of the flywheel **20** or primary shaft **2** in combination with the driving unit **13** and the coupling device **19**.

Therefore, the combined driving or braking of the travelling wheel **16** can be controlled.

The gear assembly according to the present invention is applicable in the unlimited scope in every case, when the continuous regulation of the input rotating speed or power input of driven unit is needed and when the simultaneous regulation of the output rotating speed or power output of driving unit is needed.

In case of use of the gear assembly according to the present invention for driving of any apparatus there is not necessary to apply any clutch, coupling or reversible device for reverse run, because the present gear assembly allows regulation of the rotating speed or power output from zero value to maximum value in accordance with the velocity ratio, and in particular in both directions of rotation of primary and secondary shafts.

### Industrial applicability

The gear assembly according to the present invention is applicable everywhere, when the rotating speed or power output, transmitted from the driving unit to the driven unit, is to be regulated or controlled.

The present invention is applicable in automobile industry, municipal technology, construction industry, mechanical engineering, etc.

### List of reference signs

1 - gear assembly
2 - primary shaft
3 - eccentric
4 - output segment
5 - coupling (connecting) member
6 - secondary shaft
7 - gearbox
8 - outer guide 8 of output segment 4
9 - device 9 for control of eccentric 3
10 - axis 10 of rotation of primary shaft 2
11 - axis 11 of rotation of eccentric 3
12 - point 12 of anchorage of output segment 4 in outer guide 8
13 - driving unit
14 - control unit
15 - transmission member
16 - travelling wheel
17 - link 17 between control unit 14 and device 9 for control of eccentric 3
18 - travelling device
19 - coupling (connecting) device
20 - flywheel
21 - link 21 between control unit 14 and coupling device 19

## Claims

1. A gear assembly (1) comprising a gearbox (7) provided with a primary shaft (2) and a secondary shaft (6), wherein on said primary shaft (2) there is arranged an eccentric (3), wherein on said eccentric (3) there is rotationally arranged an output segment (4) that is connected by means of coupling member (5) with said secondary shaft (6), wherein on said gearbox (7) there is arranged an outer guide (8) of said output segment (4), and on said primary shaft (2) there is arranged a device (9) for control of eccentric (3), said device (9) is adapted to change the position of axis (11) of rotation of eccentric (3) in the upwards and downwards directions with respect to the axis (10) of rotation of said primary shaft (2), **characterized in that** said outer guide (8) comprises a flexible lamellar guide.

2. The gear assembly (1) according to claim 1, **characterized in that** the device (9) for control of eccentric (3) is controllable mechanically, pneumatically, hydraulically or electromagnetically.

3. The gear assembly (1) according to claims 1 and 2, **characterized in that** said coupling member (5) is adapted for transmission of rotational movement of said output segment (4) around axis (11) of rotation of eccentric (3) onto said secondary shaft (6).

## Patentansprüche

1. Ein Getriebe (1) mit einem Drehzahlgetriebe (7), das mit einer Primärwelle (2) und einer sekundäre Welle (6) ausgerüstet ist, wobei auf der Primärwelle (2) ein Exzenter (3) angeordnet ist, auf dem ein Ausgangssegment (4) drehbar angeordnet ist, das durch ein Verbindungsglied (5) mit der sekundären Welle (6) verbunden ist, wobei auf dem Drehzahlgetriebe (7) eine Außenführung (8) des Ausgangssegments (4) angeordnet ist, und auf der Primärwelle (2) eine Vorrichtung (9) für Steuerung des Exzenters (3) angeordnet ist, die zur Lageänderung der Drehachse (11) des Exzenters (3) in der Richtung auf und ab gegenüber der Drehachse (10) der Primärwelle (2) angepasst ist,
**dadurch gekennzeichnet, dass** die Außenführung (8) durch eine elastische Lamellenleitung ausgeführt wird.

2. Das Getriebe (1) nach Anspruch 1, **dadurch gekennzeichnet, dass** die Vorrichtung (9) für Steuerung des Exzenters (3) mechanisch, pneumatisch, hydraulisch oder elektromagnetisch steuerbar ist.

3. Das Getriebe (1) nach einem der Ansprüche 1 oder 2,
**dadurch gekennzeichnet, dass** das Verbindungsglied (5) für eine Übertragung der Drehbewegung des Ausgangssegments (4) um die Drehachse (11) des Exzenters (3) auf die sekundäre Welle (6) angepasst ist.

## Revendications

1. Mécanisme de transmission (1) comportant une boîte de vitesse (7) équipée par un arbre primaire (2) et un arbre secondaire (6), ledit arbre primare (2) étant muni d'un excentrique (3) sur lequel un segment de sortie (4) est monté en rotation, ledit segment de sortie étant assemblé par une pièce de raccordement (5) avec ledit arbre secondaire (6), un guidage extérieur (8) du segment de sortie (4) agencé sur ladite boîte de tranmission (7) et un dispositif (9) de commande d'excentrique (3) arrangé sur ledit arbre primaire (2), ledit dispositif étant adapté pour changement de position d'axe de rotation (11) d'excentrique (3) en direction vers le haut et vers le bas envers une axe de rotation (10) dudit arbre primaire (2), **caractérisé en ce que** ledit quidage extérieur (8) est formé par un guidage souple lamellé.

2. Mécanisme de transmission (1) selon revendication 1, **caractérisé en ce que** le dispositif (9) peut être commandé par voie mécanique, pneumatique, hydraulique ou electromagnétique.

3. Mécanisme de transmission (1) selon revendications 1 et 2, **caractérisé en ce que** ladite pièce de raccordement (5) est adaptée pour transmission du mouvement rotatif dudit segment de sortie (4) autour de ladite axe (11) de rotation d'excentrique (3) sur ledit arbre secondaire (6).
